# EUROPÄISCHE PATENTSCHRIFT

(11) **EP 3 831 618 B1**
(45) Veröffentlichungstag und Bekanntmachung des Hinweises auf die Patenterteilung: **21.06.2023**
(21) Anmeldenummer: 20204068.9
(22) Anmeldetag: 27.10.2020
(51) Int. Cl.: B60C 5/14, B29D 30/06, B60C 19/12

(54) **FAHRZEUGLUFTREIFEN MIT DICHTMITTELLAGE UND VERFAHREN ZUR DETEKTION EINES FAHRZEUGLUFTREIFENS MIT DICHTMITTELLAGE**
PNEUMATIC VEHICLE TYRE WITH SEALING AGENT LAYER AND METHOD FOR DETECTING A PNEUMATIC VEHICLE TYRE WITH A SEALING AGENT LAYER
PNEUMATIQUE DE VÉHICULE POURVU DE COUCHE INTERMÉDIAIRE D'ÉTANCHÉITÉ ET PROCÉDÉ DE DÉTECTION D'UN PNEUMATIQUE DE VÉHICULE POURVU DE COUCHE INTERMÉDIAIRE D'ÉTANCHÉITÉ

(30) Priorität: 06.12.2019 DE 102019219042
(43) Veröffentlichungstag der Anmeldung: 09.06.2021
(73) Patentinhaber: Continental Reifen Deutschland GmbH, 30165 Hannover (DE)
(72) Erfinder: Doroshenko, Mikheil, 30419 Hannover (DE); Kunze, Christian, 30419 Hannover (DE)
(74) Vertreter: Continental Corporation

(56) Entgegenhaltungen:
- WO-A1-2018/112179
- DE-A1-102016 211 112
- DE-A1-102018 201 044
- FR-A1- 3 008 027
- US-A1- 2017 029 606

## Beschreibung

Die Erfindung betrifft einen Fahrzeugluftreifen, der eine erste Dichtmittellage wenigstens auf der dem Laufstreifen gegenüberliegenden Innenfläche aufweist. Die Erfindung betrifft ferner ein Verfahren zur Detektion eines Fahrzeugluftreifens mit Dichtmittellage.

Selbstdichtend ausgestaltete Fahrzeugluftreifen sind beispielsweise aus der DE 10 2006 059 286 A1 der Anmelderin bekannt. Hierbei werden Reifen-Standardkonstruktionen nachträglich mit einer Dichtmittellage versehen. Das selbsttätig abdichtende Dichtmittel ist eine selbsthaftende, viskose Dichtmasse, welche von radial innen im Projektionsbereich des Gürtelpakets auf die radial innerste Reifenlage, die weitgehend luftdicht ausgeführte Innenschicht, als Lage aufgetragen wird. Die Dichtmittelschicht ist in der Lage, Einstiche von bis zu fünf Millimetern Durchmesser selbständig abzudichten. Nach einem Durchstich durch den Laufstreifen bis durch die Innenschicht umschließt das Dichtmittel den eingedrungenen Fremdkörper vollständig, dichtet den Innenraum gegenüber der Umgebung ab und verhindert so einen Druckluftverlust des Reifens. Der Fahrer des Fahrzeuges ist nicht gezwungen, den defekten Reifen sofort durch ein vollwertiges Ersatzrad oder ein Notrad zu ersetzen. Das Dichtmittel zeichnet sich durch Luftdichtigkeit, starke Klebrigkeit und ausgewogenes Fließverhalten aus.

Die DE 10 2016 211112 A1 betrifft einen selbstdichtender Fahrzeugluftreifen mit einem Gürtelpaket, einem radial oberhalb des Gürtelpakets angeordneten Laufstreifen und einer radial innen angeordneten luftdicht ausgeführten Innenschicht, wobei die Selbstdichtung des Fahrzeugluftreifens durch eine nach der Vulkanisation des Fahrzeugluftreifens nachträglich radial innen aufgebrachten Dichtmittellage erhalten ist, wobei die Dichtmittellage im Wesentlichen die Breite des Gürtelpakets aufweist und im Wesentlichen in dessen Projektion angeordnet ist und einen in der die Reifenachse beinhaltenden Querschnittsebene ausgebildeten Querschnitt mit einer in axialer Richtung im Wesentlichen parallel zum Gürtelpaket verlaufenden Oberfläche und einer im Wesentlichen in radialer Richtung verlaufenden Oberfläche aufweist.

Ferner offenbart die DE 10 2018 201044 A1 einen selbstabdichtenden Fahrzeugluftreifen mit Dichtmittellage, wobei der selbstabdichtende Fahrzeugluftreifen wenigstens eine erste auf der dem Laufstreifen gegenüberliegenden Innenfläche angeordnete Dichtmittellage und wenigstens eine zweite Dichtmittellage umfasst, wobei die erste und die zweite Dichtmittellage radial benachbart zueinander angeordnet sind, und wobei die erste und die zweite Dichtmittellage hinsichtlich der dynamischen Scherviskosität bei 100 °C unterschiedliche Dichtmittel aufweisen.

Die WO 2018/112179 A1 beschreibt eine Reifendichtmittelschicht, die einen Kautschukanteil mit einer Oberseite und einer Unterseite und eine Sperrschicht auf der Unterseite des Kautschukanteils umfasst. Der Kautschukanteil umfasst ein Gemisch aus 100 Teilen mindestens eines Kautschuks, 90-500 Teilen mindestens eines Klebrigmachers, gegebenenfalls einem oder mehreren Streckmitteln, gegebenenfalls mindestens einer hydroskopischen Substanz und einem Härtungspaket. Ebenfalls offenbart wird ein Verfahren zur Herstellung einer Dichtungsschicht-Reifen-Innenauskleidungs-Kombination sowie eines Dichtungsschicht-enthaltenden Reifens und damit verbundene Verfahren, die den Dichtungsschicht-enthaltenden Reifen betreffen.

Die starke Klebrigkeit des Dichtmittels erschwert jedoch das Recycling der Reifen. Üblicherweise werden Reifen -ohne Dichtmittel- beim Recycling zunächst zerkleinert. Sollte sich unter den Reifen einer befinden, der ein Dichtmittel aufweist, so ist das Zerkleinern durch die Klebrigkeit des Dichtmittels stark erschwert, da das Dichtmittel an der Zerkleinerungsvorrichtung klebt und die weitere Zerkleinerung immer weiter erschwert.

Optisch sind Fahrzeugluftreifen mit und ohne Dichtmittel auf den ersten Blick nicht oder kaum voneinander zu unterscheiden, da das Dichtmittel meist als schwarze Masse auf der schwarzen Innenwand des Reifens angebracht ist. Die Reifen müssten somit genauer Stück für Stück betrachtet werden.

Insbesondere bei einer Vielzahl von Reifen wäre aber eine individuelle Sichtung eines jeden Reifens durch einen Operator sehr aufwändig.

Der vorliegenden Erfindung liegt daher die Aufgabe zugrunde einen Fahrzeugluftreifen, der eine Dichtmittellage wenigstens auf der dem Laufstreifen gegenüberliegenden Innenfläche aufweist (Fahrzeugluftreifen mit Dichtmittel), bereitzustellen, der einfacher von Fahrzeugluftreifen ohne Dichtmittel unterschieden werden kann.

Gelöst wird die Aufgabe dadurch, dass radial einwärts auf der ersten Dichtmittellage wenigstens eine nicht-schwarze Lage angeordnet ist.

Dadurch dass Fahrzeugluftreifen mit Dichtmittel auf der nach radial innen gerichteten Oberfläche des Dichtmittels eine nicht-schwarze Lage aufweisen, können die Reifen einfacher von Fahrzeugluftreifen ohne Dichtmittel unterschieden werden.

Insbesondere kann die Unterscheidung in einem automatisierten Verfahren mit einem Detektor, insbesondere Farbdetektor oder Photodetektor, erfolgen, ohne dass eine individuelle Sichtung des Reifens durch einen Operator notwendig ist.

Dadurch, dass lediglich die Oberfläche des Dichtmittels mit einer farbigen Lage versehen ist, können die Reifen voneinander unterschieden werden, ohne dass es notwendig ist, das gesamte Dichtmittel farbig auszugestalten.

In der EP 1533108 B1 wird ein Fahrzeugluftreifen mit farbigem nicht-schwarzem Dichtmittel offenbart, sodass durch das Fließen des Dichtmittels zur Einstichstelle im Pannenfall die Einstichstelle von außen besser erkannt wird.

Dieses Problem liegt vorliegender Erfindung nicht zugrunde. Der erfindungsgemäße Fahrzeugluftreifen hat gegenüber dem Reifen gemäß der EP 1533108 B1 die Vorteile, dass weniger Farbmittel notwendig ist und das Dichtmittel zur Verstärkung vorteilhafte Ruße enthalten kann, sodass die Herausforderungen mit Kieselsäure als Füllstoff vermieden werden können.

Im Folgenden wird die Erfindung weiter erläutert und weitere vorteilhafte Ausführungsformen beschrieben. Soweit nicht anders angegeben oder technisch nicht machbar, können verschiedene Ausführungsformen auch miteinander kombiniert werden.

Unter dem Ausdruck "nicht-schwarze Lage" ist im Rahmen der vorliegenden Erfindung zu verstehen, dass durchgängig oder zumindest teilweise nicht-schwarzes Material auf der Oberfläche der Dichtmittellage angeordnet ist.

Die Lage kann dabei unterbrochen sein, so sind beispielsweise auch Streifen an nicht-schwarzem Material denkbar.

Erfindungswesentlich ist, dass das nicht-schwarze Material umlaufend derart angebracht ist, dass eine Detektion der nicht-schwarzen Bereiche und damit der Reifen mit Dichtmittel möglich ist.

Bevorzugt ist die Lage durchgängig auf der Oberfläche der Dichtmittellage angeordnet. Hierdurch kann die Detektion besonders effizient erfolgen.

Unter "nicht-schwarz" ist weiß oder jede andere von weiß abweichende und nicht-schwarze Farbe zu verstehen.

Die farbige oder weiße Lage weist bevorzugt einen Farbton auf, der gut von schwarzen Farbtönen unterscheidbar ist, wie beispielsweise gemäß den RAL-Farbcodes 1000 bis 1037, 2000 bis 2013, 3000 bis 3033, 4000 bis 4012, 5000 bis 5026, 6000 bis 6038, 7000 bis 7048, 8000 bis 8029, 9000 bis 9003, 9010 oder 9016 auf.

Unter dem Ausdruck "radial einwärts auf der Dichtmittellage" ist eine Position zu verstehen, die in Richtung des Reifeninneren, in radialer Richtung vom Laufstreifen weg, auf der Dichtmittellage angeordnet ist. Diese Position befindet sich auf der radial nach innen gerichteten Oberfläche der Dichtmittellage.

Gemäß vorteilhafter Ausführungsformen der Erfindung umfasst die nicht-schwarze Lage wenigstens ein Farbmittel, wobei das Farbmittel ausgewählt ist aus anorganischen und organischen Farbmitteln.

Hierdurch steht ein breites Spektrum an farbgebenden Substanzen zur Verfügung, sodass geeignete Farben über das oder die Farbmittel verwendet werden können, die an den jeweiligen Detektor angepasst sind oder unter den gegebenen Lichtbedingungen besonders gut mittels eines Farbdetektors detektierbar sind.

Auch "weiß" kann mittels eines Farbdetektors detektiert werden.

Gemäß vorteilhafter Ausführungsformen der Erfindung umfasst die nicht-schwarze Lage wenigstens ein organisches Farbmittel aufweisend wenigstens ein konjugiertes π-Elektronensystem (pi-Elektronensystem). Es gibt zahlreiche derartige organische Farbmittel, sodass auch hier ein geeignetes Farbmittel wählbar ist, welches insbesondere unter den gegebenen Lichtbedingungen besonders gut mittels eines Farbdetektors detektierbar ist.

Zudem können derartige Farbmittel besonders materialsparend eingesetzt werden.

Das oder die Farbmittel können als feste Substanzen oder über eine flüssige Phase, insbesondere als Dispersion oder Lösung, aufgetragen werden.

Bei dem organischen Farbmittel aufweisend wenigstens ein konjugiertes π-Elektronensystem kann es sich prinzipiell um jedes Molekül handeln, welches bevorzugt aufgrund der Konjugation farbig ist.

Gemäß bevorzugter Ausführungsformen der Erfindung ist das organische Farbmittel ausgewählt aus der Gruppe beispielsweise enthaltend, besonders bevorzugt bestehend aus
1-[(2-chloro-4-nitrophenyl) azo]2-Naphthol (Pigment Rot 4; CAS-Nr.: 2814-77-9),
4,4'-[(3,3'-Dichlor[1,1'-biphenyl]-4,4'-diyl)bis(azo)]bis[2,4-dihydro-5-methyl-2-phenyl-3H-pyrazol-3-on] (Pigment Orange 13; CAS-Nr.: 3520-72-7),
1-amino-2-methyl-9,10-anthracenedione (CAS-Nr.: 82-28-0),
Permanent Violet RL (CAS-Nr.: 6358-30-1),
pigment yellow 155 (CAS-Nr.: 68516-73-4),
disperse blue 1 (CAS-Nr.: 2475-45-8),
Methylorange (CAS-Nr.: 547-58-0).

Bevorzugt wird ein nicht kanzerogen wirkendes und ungiftiges Farbmittel verwendet.

Gemäß vorteilhafter Ausführungsformen der Erfindung umfasst die farbige Lage wenigstens ein Farbmittel aufweisend wenigstens ein Metallatom oder Metallion. Derartige Farbmittel sind besonders stabil und behalten ihre Farbe über einen längeren Zeitraum und werden vergleichsweise langsam ausgewaschen durch Wassereintrag, wie nach Regen.

Bei dem Farbmittel aufweisend wenigstens ein Metallatom oder Metallion kann es sich prinzipiell um jede Substanz handeln, die farbig ist, wie beispielsweise Metall-Komplexe mit organischen Liganden oder anorganischen Pigmenten.

Gemäß bevorzugter Ausführungsformen der Erfindung ist das Farbmittel aufweisend wenigstens ein Metallatom oder Metallion ausgewählt aus der Gruppe beispielsweise enthaltend, besonders bevorzugt bestehend aus
Pigment Blue 27 (CAS-Nr.: 12240-15-2),
Bariumchromat (CAS-Nr.: 10294-40-3),
Aureolin (CAS-Nr.: 13782-01-9),
Ägyptisch Blau (CaCu[Si₄O₁₀], CAS-Nr. 15843-33-1).

Gemäß weiterer vorteilhafter Ausführungsformen umfasst die nicht-schwarze Lage wenigstens ein Weißpigment, wie insbesondere Kaolin, Titandioxid (TiO₂), Bariumsulfat (BaSO₄), oder Calciumcarbonat (CaCO₃), insbesondere Kreide.

Es ist auch denkbar, dass farbige Kreide verwendet wird.

Gemäß vorteilhafter Ausführungsformen der Erfindung ist die nicht-schwarze Lage aus einer Dispersion, insbesondere Suspension oder Emulsion, gebildet, wobei die Dispersion von 1 bis 80 Gew.-%, bevorzugt von 5 bis 50 Gew.-%, besonders bevorzugt von 10 bis 30 Gew.-%, ganz besonders bevorzugt 20 bis 30 Gew.-%, an Farbmitteln enthält.

Die Angabe in Gew.-% bezieht sich auf die Gesamtmasse der Dispersion vor dem Trocknen.

In der Dispersion ist gemäß vorteilhafter Ausführungsformen wenigstens ein Bindemittel, wie Polystyrol oder Poly-methylmetacrylat oder Styrol-Acrylat-Copolymer oder Polyvinylacetat, enthalten.

Bevorzugt handelt es sich bei der Dispersion um eine Suspension. Die Farbmittel sind gemäß dieser Ausführungsform in einer Flüssigkeit suspendiert.

Die Angabe in Gew.-% bezieht sich auf die Gesamtmasse der Suspension vor dem Trocknen.

Eine Suspension lässt sich einfach und materialsparend auftragen.

Die Flüssigkeit der Suspension kann jede denkbare Flüssigkeit sein, die mit dem jeweiligen Dichtmittel kompatibel ist. Gemäß vorteilhafter Ausführungsformen der Erfindung handelt es sich um eine wässrige Suspension, welche besonders umweltfreundlich ist.

Gemäß weiterer vorteilhafter Ausführungsformen der Erfindung ist die farbige Lage aus einer Lösung gebildet, wobei die Lösung wenigstens ein Lösungsmittel und von 1 bis 80 Gew.-%, bevorzugt von 5 bis 50 Gew.-%, besonders bevorzugt von 10 bis 30 Gew.-%, ganz besonders bevorzugt 20 bis 30 Gew.-%, an Farbmitteln enthält.

Die Farbmittel sind gemäß dieser Ausführungsform in einer Flüssigkeit gelöst.

Die Angabe in Gew.-% bezieht sich auf die Gesamtmasse der Lösung vor dem Trocknen.

Auch in der Lösung ist gemäß vorteilhafter Ausführungsformen wenigstens ein Bindemittel, wie Polystyrol oder Poly-methylmetacrylat oder Styrol-Acrylat-Copolymer oder Polyvinylacetat, enthalten.

Eine Lösung lässt sich einfach auftragen.

Das oder die Lösungsmittel kann/können jede denkbare Flüssigkeit sein, die mit dem jeweiligen Dichtmittel kompatibel ist.

Gemäß vorteilhafter Ausführungsformen der Erfindung handelt es sich um eine wässrige Lösung, welche besonders umweltfreundlich und nicht brennbar ist.

Gemäß weiterer vorteilhafter Ausführungsformen der Erfindung handelt es sich um wenigstens ein organisches Lösungsmittel. Das organische Lösungsmittel kann prinzipiell jedes dem Fachmann bekannte geeignete Lösungsmittel sein, wie Alkohole (Einfach- oder Mehrfachalkohole), Ketone, Ester, Aldehyde, Aromaten, Alkaen wie Hexan, oder Ether, wie Petrolether.

Das organische Lösungsmittel ist gemäß bevorzugter Ausführungsformen ausgewählt aus Lösungsmitteln, die mit dem Dichtmittel und den übrigen Reifenbauteilen kompatibel sind bzw. diese nicht aufquellen lassen oder die Bestandteile lösen, wie insbesondere einfache Alkohole, wie Ethanol oder Isopropanol. Diese sind zudem vergleichsweise umweltfreundlich und die meisten wasserunlöslichen Farbmittel sind darin gut lösbar.

Gemäß weiterer vorteilhafter Ausführungsformen der Erfindung ist nicht-schwarze Lage aus Farbmitteln, welche als Feststoffe, insbesondere in Pulverform, aufgetragen sind, ausgebildet.

Das Pulver kann mittels Luftzerstäubung, beispielsweise mittels Pistole, oder elektrostatisch auf das Dichtmittel aufgetragen sein.

Gemäß der Erfindung ist nicht-schwarze Lage aus einer Folie ausgebildet. Auch eine Folie lässt sich einfach und materialsparend und insbesondere mit konstanter Schichtdicke auftragen.

Gemäß vorteilhafter Weiterbildungen der Erfindung ist die farbige Lage zugleich klebrigkeitsreduzierend ausgestaltet. Hierzu können ggf. weitere Substanzen in der Lage enthalten sein, sofern die Lage nicht bereits aufgrund des oder der Farbmittel(s) und ggf. diese umgebenden Substanzen, wie Flüssigkeiten, die Klebrigkeit des Dichtmittels an der nach radial einwärts gerichteten Oberfläche reduziert.

Beispielsweise kann die Lage wie in der DE 202015006945 U1 offenbart, zusätzlich wenigstens ein Alkalisalz wenigstens einer Fettsäure und/oder wenigstens ein Erdalkalisalz wenigstens einer Fettsäure enthalten.

Gemäß vorteilhafter Ausführungsformen weist die farbige Lage eine Schichtdicke (gemessen in radialer Richtung (rR) senkrecht zur axialen Richtung (aR) des Fahrzeugreifens) von 1 µm (Mikrometer) bis 1000 µm auf.

Besonders bevorzugt weist die farbige Lage (6) eine Schichtdicke von 2 bis 400 µm (Mikrometer), besonders bevorzugt 5 µm bis 100 µm, auf.

Hierdurch kann das Dichtmittel möglichst materialsparend farbig markiert werden, ohne dass der Fahrzeugluftreifen eine zu hohe zusätzliche Masse erhält, durch welche sich Rollwiderstandsnachteile ergeben würden. Ferner ist damit weiterhin das Fließverhalten und damit die Abdichtwirkung des Dichtmittels sichergestellt bzw. nicht negativ beeinträchtigt.

Das Dichtmittel ist gemäß vorteilhafter Ausführungsformen der Erfindung schwarz oder nahezu schwarz. Dies bedeutet, dass das Dichtmittel beispielsweise einen Farbton gemäß den RAL-Farbcodes 9004 bis 9007, 9011, 9017 bis 9023 aufweist.

Das Dichtmittel kann auch braun oder grau oder durchsichtig sein, wobei bei einem durchsichtigen Dichtmittel der Innerliner des Reifens schwarz durchscheint.

Das Dichtmittel enthält hierzu bevorzugt wenigstens einen Füllstoff, durch welchen es den schwarzen Farbton erhält. Hierbei kann es sich insbesondere um Ruß und/oder Graphit und/oder Graphen und/oder Kohlenstoffnanoröhrchen handeln.

Unter Ruß sind insbesondere Industrieruße und Pyrolyseruße zu verstehen.

Besonders bevorzugt enthält das Dichtmittel wenigstens einen Ruß, ganz besonders bevorzugt wenigstens einen Industrieruß.

Dies hat den Vorteil, dass die Kohäsion des Dichtmittels erhöht und die Klebrigkeit des Dichtmittels während des Herstellverfahrens erniedrigt wird. Gleichzeitig werden die Ortsfestigkeit und die Reißeigenschaften des Dichtmittels verbessert.

Als Ruße sind im Rahmen der vorliegenden Erfindung prinzipiell alle dem Fachmann bekannten Ruß-Typen denkbar.

Gemäß einer vorteilhaften Ausführungsform der Erfindung wird ein Ruß eingesetzt, der eine Jodadsorptionszahl gemäß ASTM D 1510 von 20 bis 180 g/kg, besonders bevorzugt 30 bis 140 g/kg, und eine DBP-Zahl gemäß ASTM D 2414 von 30 bis 200 ml/100 g, bevorzugt 90 bis 180 ml/100g, besonders bevorzugt 110 bis 180 ml/100g, aufweist. Gemäß einer weiteren bevorzugten Ausführungsform der Erfindung wird ein Ruß des Typs N326 verwendet.

Es ist auch ein Gemisch von zwei oder mehreren Rußen denkbar.

Bei dem Dichtmittel kann es sich um alle geeigneten und dem Fachmann bekannten Dichtmittelzusammensetzungen handeln, wie beispielsweise auf Silikonbasis, oder auf Basis von Polyurethan oder basierend auf der Vernetzung eines Kautschuks und/oder eines Polyolefins.

Gemäß einer vorteilhaften und beispielsweisen Ausführungsform enthält das Dichtmittel wenigstens einen Kautschuk. Bevorzugt enthält es 15 bis 60 Gew.-% wenigstens eines Kautschuks.

Bei dem Kautschuk kann es sich um alle dem Fachmann bekannten Kautschuktypen handeln. Es ist auch ein Gemisch verschiedener Kautschuke denkbar.

Gemäß einer bevorzugten Ausführungsform der Erfindung handelt es sich bei dem Kautschuk um Naturkautschuk (NR) und/oder Butadien-Kautschuk (BR) und/oder Isopren-Kautschuk (IR) und/oder Styrol-Butadien-Kautschuk (SBR) und/oder Polychloropren (CR) und/oder Butylkautschuk (IIR) und/oder Brombutylkautschuk (BIIR) und/oder Chlorbutylkautschuk (CIIR) und/oder Silikonkautschuk.

Diese Kautschuktypen sind für die Verarbeitungstemperaturen bei der Herstellung des Dichtmittels und später bei der Anwendung, insbesondere im Fahrzeugluftreifen, besonders gut geeignet.

Gemäß beispielhafter Ausführungsformen kann das Dichtmittel insbesondere natürliches und/oder synthetisches Polyisopren, bevorzugt natürliches Polyisopren, enthalten.

Hierbei kann beispielsweise fester Naturkautschuk (NR) mit flüssigem Polyisopren in Kombination verwendet werden.

Beispielsweise kann das Dichtmittel Naturkautschuk und Styrol-Butadien-Kautschuk (SBR), beispielsweise ESBR (emulsionspolymerisierten Styrol-Butadien-Kautschuk) enthalten. Die Vernetzung kann auf Peroxiden basieren und/oder auf einer Schwefelvernetzung. Beispielsweise kann Schwefel in Kombination mit peroxidischen Agenzien, wie beispielsweise "VAROX-Organic-Peroxide-Crosslinking-Agents", der Firma Vanderbilt Chemicals, LLC verwendet werden. Das Verhältnis von NR zu ESBR beträgt beispielsweise 30 bis 40 zu 60 bis 70 Gew.-%.

Gemäß weiteren beispielhaften Ausführungsformen handelt es sich um ein Silikonbasiertes Dichtmittel.

Gemäß einer vorteilhaften und beispielsweisen Ausführungsform basiert das Dichtmittel auf der Vernetzung eines Kautschuks und/oder Polyolefins. Für den Kautschuk gelten die obigen Ausführungen.

Dem Fachmann ist klar, dass sämtliche genannten Bestandteile im vernetzten Dichtmittel zumindest teilweise in chemisch veränderter Form, insbesondere als Derivate, vorliegen.

Besonders bevorzugt wird wenigstens Butylkautschuk (IIR) verwendet. Butylkautschuk eignet sich besonders gut, da er eine vergleichsweise hohe Luftdichtigkeit aufweist.

Gemäß einer besonders vorteilhaften Ausführungsform der Erfindung enthält das selbsttätig abdichtende Reifendichtmittel 10 bis 50 Gew.-% wenigstens eines Polyolefins. Hiermit wird ein optimales Fließverhalten bei einer gleichzeitig guten Herstellbarkeit (Prozessierbarkeit) des Dichtmittels erzielt.

Das wenigstens eine Polyolefin weist bevorzugt ein Zahlenmittel der Molekulargewichtsverteilung Mₙ gemäß GPC von 400 bis 2500 g/mol, besonders bevorzugt 800 bis 2500 g/mol, ganz besonders bevorzugt 800 bis 1600 g/mol, wiederum bevorzugt 1200 bis 1600 g/mol, wiederum besonders bevorzugt 1200 bis 1400 g/mol, beispielsweise 1300 g/mol, auf.

Ein Polyolefin mit den genannten Bereichen für das Mₙ ist besonders geeignet, um die gewünschte Fließfähigkeit bei gleichzeitiger Abdichtwirkung des Dichtmittels im Pannenfall zu erzeugen.

Hierbei ist es besonders bevorzugt, dass das wenigstens eine Polyolefin wenigstens ein Polybuten ist.

Dieses stellt die Klebrigkeit des fertigen Dichtmittels ein und bestimmt die Fließfähigkeit im Produktionsprozess sowie die lokale Ortsfestigkeit des fertigen Dichtmittels.

Es kann sich auch um ein Gemisch zweier oder mehrerer Polybutene mit jeweils einem Mₙ von 400 bis 2500 g/mol handeln, wobei sich die Polybutene im Mₙ unterscheiden können. Geeignete Polybutene, auch Polyisobutene genannt, sind beispielsweise unter den Handelsnamen Indopol^{®} Polybutene der Firma INEOS Capital Limited erhältlich.

Es ist auch ein Gemisch wenigstens eines Polybutens mit wenigstens einem weiteren Polyolefin denkbar.

Dem Fachmann ist klar, dass die genannten Bestandteile im vernetzten Dichtmittel zumindest teilweise in chemisch veränderter Form, insbesondere als Derivate, vorliegen.

Bevorzugt basiert das Dichtmittel auf der Vernetzung durch wenigstens einen Vernetzer, der ausgewählt ist aus der Gruppe enthaltend, besonders bevorzugt bestehend aus, Polymethylolharz und Divinylbenzol und Chinonen. Das Chinon ist bevorzugt ein Chinondioxim, beispielsweise Dibenzoylchinondioxim oder para-Benzochinondioxim. Besonders bevorzugt ist para-Benzochinondioxim.

Bevorzugt basiert das Dichtmittel auf der Vernetzung durch wenigstens einen Vernetzer in Kombination mit einem Vernetzungsinitiator, wobei der Vernetzungsinitiator bevorzugt ausgewählt aus der Gruppe enthaltend Bleioxid und andere Metalloxide und peroxidische Verbindungen. Der Vernetzungsinitiator ist eine chemische Verbindung, welche die Vernetzung des Dichtmittels initiiert.

Eine peroxidische Verbindung ist eine chemische Verbindung, die wenigstens eine Peroxid-Einheit, also -O-O- enthält (wobei O = Sauerstoff). Es können auch mehrere Peroxide eingesetzt werden. Das oder die Peroxid(e) sind bevorzugt ausgewählt aus der Gruppe bestehend aus Diarylperoxiden, Diacylperoxiden und Peroxyestern.

Der Vernetzungsinitiator kann als reine Substanz oder in einem Gemisch zugegeben werden. Im Falle eines Gemisches, beispielsweise von 50 Gew.-% Dibenzoylperoxid in Dibutylmaleat, geht nur die Menge des enthaltenen Peroxides in die Menge an Vernetzungsinitiator mit ein, sodass in den angegebenen Mengen des wenigstens einen Vernetzungsinitiators Begleitsubstanzen wie Dibutylmaleat nicht eingerechnet sind.

Das Dichtmittel kann ferner weitere Bestandteile enthalten,
wie insbesondere schwarz färbende Substanzen, wie die oben genannten Füllstoffe, insbesondere Ruß,
sowie ggf. weitere Füllstoff(e) wie insbesondere Kieselsäure,
sowie gegebenenfalls weitere Zusatzstoffe, wie z. B. Klebrigmacher,
Weichmacher, wie z. B. Öl(e), sowie Zinkoxid und/oder Schwefel.

Gemäß einer weiteren bevorzugten Ausführungsform der Erfindung umfasst der Füllstoff wenigstens eine Kieselsäure (engl. "silica"). Die Begriffe "Kieselsäure" und "Silika" werden im Rahmen der vorliegenden Erfindung synonym verwendet.

Hierdurch wird eine optimale Verstärkung des Dichtmittels erzielt und eine gute Viskositätskontrolle und -einstellung ermöglicht. Zudem wird mit wenigstens einer Kieselsäure die Kohäsion des Dichtmittels erhöht und die Klebrigkeit des Dichtmittels während des Herstellverfahrens erniedrigt wird. Gleichzeitig werden die Ortsfestigkeit und die Reißeigenschaften des Dichtmittels verbessert.

Es ist auch ein Gemisch von zwei oder mehreren Kieselsäuren denkbar.

Bei den Kieselsäuren kann es sich um die dem Fachmann bekannten Kieselsäuren, die als Füllstoff für Reifenkautschukmischungen geeignet sind, handeln. Als Kieselsäuren können somit z. B. sowohl jene des Typs Ultrasil^{®} VN3 (Handelsname) der Firma Evonik als auch Kieselsäuren mit einer vergleichsweise niedrigen BET-Oberfläche (wie z. B. Zeosil^{®} 1115 oder Zeosil^{®} 1085 der Firma Solvay) als auch hoch dispergierbare Kieselsäuren, so genannte HD-Kieselsäuren (z. B. Zeosil^{®} 1165 MP der Firma Solvay) verwendet werden.

Ferner ist ein Gemisch der genannten Füllstoffe denkbar und bevorzugt, wie insbesondere wenigstens ein Industrieruß in Kombination mit wenigstens einer Kieselsäure, wobei sich ebenfalls die genannten Vorteile ergeben.

Das Dichtmittel enthält gemäß vorteilhafter Ausführungsformen wenigstens einen Klebrigmacher, und zwar insbesondere für den Fall, dass das Dichtmittel nicht bereits aufgrund der enthaltenen Bestandteile, insbesondere der Polymere eine ausreichende Klebrigkeit aufweist. Unter "Klebrigmacher" wird prinzipiell jede Substanz verstanden, die die Klebrigkeit des Dichtmittels erhöht.

Gemäß vorteilhafter Ausführungsformen der Erfindung handelt es sich bei dem Klebrigmacher um wenigstens ein Kohlenwasserstoffharz.

Dem Fachmann ist klar, dass Kohlenwasserstoffharze Polymere sind, die aus Monomeren aufgebaut sind, wobei das Kohlenwasserstoffharz durch die Verknüpfung der Monomere zueinander formal aus Derivaten der Monomere aufgebaut ist.

Der Begriff "Kohlenwasserstoffharze" umfasst im Rahmen der vorliegenden Anmeldung Harze, die Kohlenstoffatome und Wasserstoffatome aufweisen sowie optional Heteroatome, wie insbesondere Sauerstoffatome, aufweisen können.

Das Kohlenwasserstoffharz kann ein Homopolymer oder ein Copolymer sein. Unter Homopolymer wird in der vorliegenden Anmeldung ein Polymer verstanden, welches gemäß Römpp Online (Auszug vom 02.01.2017, letzte Aktualisierung des Artikels August 2008) "aus Monomeren nur einer Art entstanden ist".

Unter Copolymer wird im Rahmen der vorliegenden Erfindung ein Polymer verstanden, welches aus mehreren, d.h. zwei oder mehr, verschiedenen Monomeren aufgebaut ist. Im Rahmen der vorliegenden Erfindung kann das Kohlenwasserstoffharz daher z.B. auch ein Copolymer aus drei verschiedenen Monomeren sein.

Bei den Monomeren kann es sich um alle dem Fachmann bekannten Monomere von Kohlenwasserstoffharzen handeln, wie aliphatische Monomere, insbesondere aliphatische C₅-Monomere, weitere ungesättigte Verbindungen, die kationisch polymerisiert werden können, enthaltend Aromaten und/oder Terpene und/oder Alkene und/oder Cycloalkene. Bevorzugte Monomere sind insbesondere C₅ und C₉-Monomere.

Bei den Aromaten (aromatische Monomere) kann es sich beispielsweise um alpha-Methylstyrol und/oder Styrol und/oder Vinyltoluol und/oder Inden und/oder Cumaron und/oder Methylinden und/oder Methylcumaron und/oder Phenol handeln.

Bevorzugt handelt es sich bei den aromatischen Monomeren um alpha-Methylstyrol und/oder Styrol und/oder Vinyltoluol und/oder Inden und/oder Cumaron und/oder Methylinden und/oder Methylcumaron.

Gemäß Römpp Online ist der Begriff "Olefine" die "Gruppenbezeichnung für acyclische und cyclische aliphatische Kohlenwasserstoffe mit einer oder mehreren reaktiven C=C-Doppelbindungen im Molekül, die heute besser als Alkene bzw. Cycloalkene bezeichnet werden, in weiterem Sinne auch Bezeichnung für deren substituierte Derivate...." Im Rahmen der vorliegenden Erfindung werden daher ungesättigte Terpene, Alkene und Cycloalkene unter den Oberbegriff Olefine zusammengefasst.

Bei den Alkenen kann es sich beispielsweise um 1-Buten und/oder 2-Buten und/oder Butadien handeln.

Gemäß einer bevorzugten Ausführungsform der Erfindung handelt es sich bei dem Kohlenwasserstoffharz um wenigstens ein aliphatisches Harz, also ein Harz welches keine aromatischen Ringsysteme enthält. Ein derartiges Harz besteht zu 100 Gew.-% aus aliphatischen Monomeren bzw. dessen Derivaten.

Gemäß einer weiteren Ausführungsform der Erfindung besteht das Harz zu 10 bis 99 Gew.-%, bevorzugt 50 bis 99 Gew.-%, besonders bevorzugt 70 bis 99 Gew.-%, aus aliphatischen und zu 1 bis 90 Gew.-%, bevorzugt 1 bis 50 Gew.-%, besonders bevorzugt 1 bis 30 Gew.-% aus aromatischen Monomeren.

Gemäß einer bevorzugten Ausführungsform der Erfindung handelt es sich bei dem Kohlenwasserstoffharz um wenigstens ein Harz, welches wenigstens aus Cs-Monomeren aufgebaut ist und dem Fachmann als sogenanntes Cs-Harz bekannt ist. Hiermit werden besonders gute Eigenschaften des Dichtmittels, insbesondere ein optimiertes Fließverhalten bei gleichzeitig guter Klebrigkeit, erzielt.

Bei den aliphatischen Cs-Monomeren kann es sich um Monomere der Cs-Erdölfraktion, z.B. Isopren, und/oder Monomere der Terpene und/oder Cycloolefine und/oder Olefine, wie z.B. Penten, handeln. Unter Cs ist zu verstehen, dass diese Monomere aus fünf Kohlenstoffatomen aufgebaut sind.

Ferner ist dem Fachmann bekannt, dass die Cs-Erdölfraktion außer aliphatischen Monomeren mit fünf Kohlenstoffatomen andere aliphatische Monomere (Bausteine) mit z.B. vier, also C₄-Monomere, oder sechs Kohlenstoffatomen, C₆-Monomere, enthalten kann.

Gemäß vorteilhafter Ausführungsformen der Erfindung enthält das Dichtmittel 2 bis 30 Gew.-% wenigstens eines Kohlenwasserstoffharzes als Klebrigmacher. Bevorzugt beträgt die Menge des wenigstens einen Kohlenwasserstoffharzes 2 bis 20 Gew.-%.

Mit derartigen bevorzugten und besonders bevorzugten Mengen werden die Klebrigkeit und die Viskosität des Dichtmittels weiter optimiert.

Gemäß vorteilhafter Ausführungsformen der Erfindung enthält das Dichtmittel folgende Bestandteile in folgenden Mengen:
- 10 bis 50 Gew.-% wenigstes eines Polyolefins, bevorzugt wenigstens eines Polybutens, und
- 2,0 bis 30 Gew.-% wenigstens eines Klebrigmachers und
- 15 bis 60 Gew.-% wenigstens eines Kautschuks und
- 2,0 bis 22 Gew.-% wenigstens eines Füllstoffs und
- 1,0 bis 3,0 Gew.-% wenigstens eines Vernetzers und
- 1,8 bis 4,8 Gew.-% wenigstens eines Vernetzungsinitiators.

Die Angaben in Gew.-% beziehen sich jeweils auf die Gesamtmenge an Dichtmittel.

Die Dichtmittelzusammensetzung kann durch bekannte Verfahren und Vorrichtungen hergestellt werden, insbesondere durch intensives Mischen in einem Mischer oder Extruder, insbesondere einem Doppelschneckenextruder.

Das Dichtmittel wird mittels dem Fachmann bekannten Verfahren und Vorrichtungen auf die Reifeninnenseite aufgebracht.

Die farbige Lage wird je nach ihrer Art auf die nach radial innen gerichtete Oberfläche des Dichtmittels aufgebracht. Insbesondere kann sie als Suspension, Emulsion oder Lösung aufgetragen werden.

Ein weiterer Gegenstand der Erfindung ist ein Verfahren zur Detektion eines erfindungsgemäßen Fahrzeugluftreifens zum Unterscheiden von Fahrzeugluftreifen aufweisend ein Dichtmittel gegenüber Fahrzeugluftreifen ohne Dichtmittel.

Bei dem erfindungsgemäßen Verfahren wird die Dichtmittellage aufgrund der farbigen Lage von einem Detektor erkannt wird.

Bei dem Detektor kann es sich um einen Photodetektor oder einen Farbdetektor handeln. Bevorzugt ist ein Farbdetektor, der auf bestimmte Farben, beispielsweise nach dem RAL-System, programmiert ist.

Geeignete Detektoren sind dem Fachmann bekannt und sind üblicherweise computerunterstützt.

Es kann sich ferner um ein Handgerät handeln oder einen Detektor, der in einem automatisierten Verfahren über einen Roboter verwendet wird.

Ein weiterer Gegenstand der Erfindung ist ein Verfahren zum Recycling von Fahrzeugluftreifen umfassend wenigstens die folgenden Verfahrensschritte:
a) Bereitstellung von zu recycelnden Fahrzeugluftreifen;
b) Durchführung des erfindungsgemäßen Verfahrens, um Fahrzeugluftreifen mit Dichtmittel von Fahrzeugluftreifen ohne Dichtmittel zu unterscheiden;
c) Räumliche Separation von Fahrzeugluftreifen aufweisend ein Dichtmittel von Fahrzeugluftreifen ohne Dichtmittel;
d) Recycling von Fahrzeugluftreifen ohne Dichtmittel umfassend die Zerkleinerung der Fahrzeugluftreifen;
e) Überführung von Fahrzeugluftreifen aufweisend ein Dichtmittel zu einem separaten Recycling-Prozess umfassend das Abtrennen des Dichtmittels und erst die anschließende Zerkleinerung der Fahrzeugluftreifen.

Gemäß einer vorteilhaften Ausführungsform der Erfindung, erfolgt Schritt c) in Verbindung mit Schritt b) automatisiert.

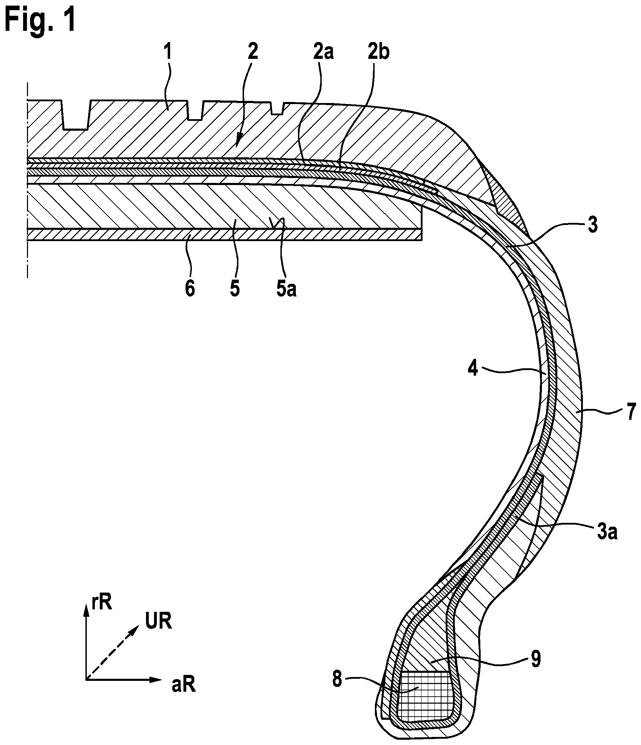

Weitere Einzelheiten der Erfindung werden anhand der Figur 1, die eine schematische Darstellung eines Ausführungsbeispiels ist, näher erläutert.

Die wesentlichen Bestandteile, aus welchen sich der erfindungsgemäße Fahrzeugluftreifen zusammensetzt, sind ein profilierter Laufstreifen 1, ein bei der gezeigten Ausführung aus zwei Lagen 2a, 2b bestehendes Gürtelpaket 2, eine einlagige Karkasse 3, welche um die Wulstkerne 8 und Wulstkernprofile 9 von axial innen nach axial außen herumgeführt ist und im Karkasshochschlag 3a endet, sowie Seitenwände 7. Die beiden Lagen 2a, 2b des Gürtelpakets 2 bestehen aus in eine Gummimischung eingebetteten Festigkeitsträgern aus Stahlcord, welche innerhalb jeder Lage parallel zueinander verlaufen, wobei die Stahlcorde der einen Lage 2a in kreuzender Anordnung zu den Stahlcorden der zweiten Lage 2b orientiert sind und mit der Reifenumfangsrichtung jeweils einen Winkel zwischen 15° und 45° einschließen. Auch die einlagige Karkasse 3 kann in herkömmlicher und bekannter Weise ausgeführt sein und somit in eine Gummimischung eingebettete, in radialer Richtung verlaufende Verstärkungsfäden aus einem textilen Material oder aus Stahlcord aufweisen. Die Selbstdichtung des Fahrzeugluftreifens ist durch eine nach der Vulkanisation des Fahrzeugluftreifens nachträglich radial innen umlaufend aufgebrachte Dichtmittellage 5 erhalten. Die Dichtmittellage 5 weist im Wesentlichen die Breite des Gürtelpakets 2 auf und ist im Wesentlichen in dessen Projektion angeordnet und weist einen in der die Reifenachse beinhaltenden Querschnittsebene ausgebildeten Querschnitt mit einer radial nach innen gerichteten in axialer Richtung, im Wesentlichen parallel zum Gürtelpaket, verlaufende Oberfläche 5a auf.

Gemäß dem Beispiel in Figur 1 ist radial einwärts auf der Dichtmittellage 5, also auf der radial nach innen gerichteten Oberfläche 5a der Dichtmittellage 5, eine nicht-schwarze Lage 6 angeordnet.

Beispielsweise wird die nicht-schwarze Lage 6 dadurch ausgebildet, dass auf die Dichtmittellage 5 eine Suspension enthaltend das Farbmittel Methylorange aufgetragen wird. Die nicht-schwarze Lage ist somit farbig, nämlich orange. Die Flüssigkeit der Suspension ist beispielsweise Wasser, wobei als Bindemittel ferner Styrol-Acrylat-Copolymer enthalten ist.

Das Dichtmittel selbst ist schwarz ausgebildet. Es enthält zur Verstärkung wenigstens einen Ruß, insbesondere N 326, und die oben genannte Zusammensetzung.

Der beispielhaft beschriebene Fahrzeugluftreifen kann nun gemäß dem erfindungsgemäßen Verfahren von Fahrzeugluftreifen ohne Dichtmittel durch einen Farbdetektor unterschieden werden. Der Farbdetektor ist hierzu insbesondere auf die Erkennung / Detektion von orangenen Farbtönen programmiert.

Hierdurch können erfindungsgemäße Fahrzeugluftreifen mit Dichtmittel und Fahrzeugluftreifen ohne Dichtmittel in einem erfindungsgemäßen beispielsweise automatisierten Verfahren voneinander unterschieden, räumlich separiert und unterschiedlichen Recycling-Verfahren zugeführt werden. Dabei werden beim erfindungsgemäßen Reifen zunächst in einem zusätzlichen Schritt Dichtmittel und farbige Lage vom Reifen entfernt.

### Bezugszeichenliste

### (Teil der Beschreibung)

- 1: Laufstreifen
- 2: Gürtelpaket
- 2a: Gürtellage
- 2b: Gürtellage
- 3: Karkasse
- 3a: Karkasshochschlag
- 4: Innenschicht
- 5: Erste Dichtmittellage
- 5a: radial nach innen gerichtete in axialer Richtung, im Wesentlichen parallel zum Gürtelpaket, verlaufende Oberfläche der ersten Dichtmittellage
- 6: nicht-schwarze Lage
- 7: Seitenwand
- 8: Wulstkern
- 9: Wulstkernprofil

- rR: radiale Richtung
- aR: axiale Richtung
- UR: Umlaufrichtung des Reifens

## Patentansprüche

1. Fahrzeugluftreifen, der eine Dichtmittellage (5) wenigstens auf der dem Laufstreifen (1) gegenüberliegenden Innenfläche aufweist, wobei radial einwärts auf der ersten Dichtmittellage (5) wenigstens eine nicht-schwarze Lage (6) angeordnet ist, **dadurch gekennzeichnet, dass** die nicht-schwarze Lage (6) aus einer Folie gebildet ist.

2. Fahrzeugluftreifen nach Anspruch 1, **dadurch gekennzeichnet, dass** die nicht-schwarze Lage (6) weiß oder farbig ist und wenigstens ein Farbmittel umfasst, wobei das Farbmittel ausgewählt ist aus anorganischen und organischen Farbmitteln.

3. Fahrzeugluftreifen nach einem der vorherigen Ansprüche, **dadurch gekennzeichnet, dass** die nicht-schwarze Lage (6) wenigstens ein organisches Farbmittel aufweisend wenigstens ein konjugiertes π-Elektronensystem umfasst, wobei das organische Farbmittel ausgewählt aus der Gruppe bestehend aus
1-[(2-chloro-4-nitrophenyl) azo]2-Naphthol (Pigment Rot 4; CAS-Nr.: 2814-77-9),
4,4'-[(3,3'-Dichlor[1,1'-biphenyl]-4,4'-diyl)bis(azo)]bis[2,4-dihydro-5-methyl-2-phenyl-3H-pyrazol-3-on] (Pigment Orange 13; CAS-Nr.: 3520-72-7),
1-amino-2-methyl-9,10-anthracenedione (CAS-Nr.: 82-28-0),
Permanent Violet RL (CAS-Nr.: 6358-30-1),
pigment yellow 155 (CAS-Nr.: 68516-73-4),
disperse blue 1 (CAS-Nr.: 2475-45-8),
Methylorange (CAS-Nr.: 547-58-0).

4. Fahrzeugluftreifen nach einem der vorherigen Ansprüche, **dadurch gekennzeichnet, dass** die nicht-schwarze Lage (6) wenigstens ein Farbmittel aufweisend wenigstens ein Metallatom oder Metallion umfasst.

5. Fahrzeugluftreifen nach Anspruch 4, **dadurch gekennzeichnet, dass** das Farbmittel aufweisend wenigstens ein Metallatom oder Metallion ausgewählt aus der Gruppe bestehend aus
Pigment Blue 27 (CAS-Nr.: 12240-15-2),
Bariumchromat (CAS-Nr.: 10294-40-3),
Aureolin (CAS-Nr.: 13782-01-9),
Ägyptisch Blau (CaCu[Si₄O₁₀], CAS-Nr. 15843-33-1).

6. Fahrzeugluftreifen nach einem der vorherigen Ansprüche, **dadurch gekennzeichnet, dass** die nicht-schwarze Lage (6) aus einer Dispersion, insbesondere Suspension oder Emulsion, oder einer Lösung gebildet ist, wobei die Dispersion oder die Lösung von 1 bis 80 Gew.-% an Farbmitteln enthält.

7. Fahrzeugluftreifen nach einem der vorherigen Ansprüche, **dadurch gekennzeichnet, dass** die nicht-schwarze Lage (6) eine Schichtdicke von 1 bis 1000 µm (Mikrometer) aufweist.

8. Fahrzeugluftreifen nach einem der vorherigen Ansprüche, **dadurch gekennzeichnet, dass** das Dichtmittel wenigstens einen Füllstoff enthält, durch welches einen schwarzen Farbton erhält, wie insbesondere Ruß und/oder Graphit und/oder Graphen und/oder Kohlenstoffnanoröhrchen.

9. Verfahren zur Detektion eines Fahrzeugluftreifens gemäß Anspruch 1 zum Unterscheiden von Fahrzeugluftreifen aufweisend ein Dichtmittel gegenüber Fahrzeugluftreifen ohne Dichtmittel, wobei die Dichtmittellage (5) aufgrund der nicht-schwarzen Lage (6) von einem Detektor erkannt wird.

10. Verfahren zum Recycling von Fahrzeugluftreifen umfassend wenigstens die folgenden Verfahrensschritte:
a) Bereitstellung von zu recycelnden Fahrzeugluftreifen;
b) Durchführung des Verfahrens nach Anspruch 9;
c) Räumliche Separation von Fahrzeugluftreifen aufweisend ein Dichtmittel von Fahrzeugluftreifen ohne Dichtmittel;
d) Recycling von Fahrzeugluftreifen ohne Dichtmittel umfassend die Zerkleinerung der Fahrzeugluftreifen;
e) Überführung von Fahrzeugluftreifen aufweisend ein Dichtmittel zu einem separaten Recycling-Prozess umfassend das Abtrennen des Dichtmittels und erst die anschließende Zerkleinerung der Fahrzeugluftreifen.

## Claims

1. Pneumatic vehicle tire which comprises a sealant layer (5) at least on the inner surface opposite the tread (1), wherein at least one non-black layer (6) is arranged radially inward on the first sealant layer (5), **characterized in that** the non-black layer (6) is formed from a film.

2. Pneumatic vehicle tire according to Claim 1, **characterized in that** the non-black layer (6) is white or coloured and comprises at least one colorant, wherein the colorant is selected from inorganic and organic colorants.

3. Pneumatic vehicle tire according to any of the preceding claims, **characterized in that** the non-black layer (6) comprises at least one organic colorant comprising at least one conjugated π-electron system, wherein the organic colorant is selected from the group consisting of 1-[(2-chloro-4-nitrophenyl)azo]2-naphthol (Pigment Red 4; CAS No.: 2814-77-9), 4,4'-[(3,3'-dichloro[1,1'-biphenyl]-4,4'-diyl)bis(azo)]bis[2,4-dihydro-5-methyl-2-phenyl-3H-pyrazol-3-one] (Pigment Orange 13; CAS No.: 3520-72-7), 1-amino-2-methyl-9,10-anthracenedione (CAS No.: 82-28-0), Permanent Violet RL (CAS No.: 6358-30-1), Pigment Yellow 155 (CAS No.: 68516-73-4), Disperse Blue 1 (CAS No.: 2475-45-8), Methyl Orange (CAS No.: 547-58-0).

4. Pneumatic vehicle tire according to any of the preceding claims, **characterized in that** the non-black layer (6) comprises at least one colorant comprising at least one metal atom or metal ion.

5. Pneumatic vehicle tire according to Claim 4, **characterized in that** the colorant comprising at least one metal atom or metal ion is selected from the group consisting of
Pigment Blue 27 (CAS No.: 12240-15-2),
Barium chromate (CAS No.: 10294-40-3),
Aureolin (CAS No.: 13782-01-9),
Egyptian Blue (CaCu[Si₄O₁₀], CAS No. 15843-33-1).

6. Pneumatic vehicle tire according to any of the preceding claims, **characterized in that** the non-black layer (6) is formed from a dispersion, in particular suspension or emulsion, or a solution, wherein the dispersion or the solution contains from 1% to 80% by weight of colorants.

7. Pneumatic vehicle tire according to any of the preceding claims, **characterized in that** the non-black layer (6) has a layer thickness of 1 to 1000 µm (micrometres).

8. Pneumatic vehicle tire according to any of the preceding claims, **characterized in that** the sealant contains at least one filler endowing it with a black hue, such as in particular carbon black and/or graphite and/or graphene and/or carbon nanotubes.

9. Process for detection of a pneumatic vehicle tire according to Claim 1 for distinguishing pneumatic vehicle tires comprising a sealant from pneumatic vehicle tires without sealant, wherein the sealant layer (5) is identified by a detector on account of the non-black layer (6).

10. Process for recycling pneumatic vehicle tires comprising at least the process steps of:
a) providing pneumatic vehicle tires to be recycled;
b) performing the process according to Claim 9;
c) spatial separation of pneumatic vehicle tires comprising a sealant from pneumatic vehicle tires without sealant;
d) recycling of pneumatic vehicle tires without sealant comprising comminution of the pneumatic vehicle tires;
e) transfer of pneumatic vehicle tires comprising a sealant to a separate recycling process comprising separation of the sealant and only subsequently comminution of the pneumatic vehicle tires.

## Revendications

1. Pneumatique de véhicule, qui comporte une couche d'agent colmatant (5) au moins sur la surface interne opposée à la bande de roulement (1), au moins une couche non noire (6) étant disposée radialement vers l'intérieur sur la première couche d'agent colmatant (5), **caractérisé en ce que** la couche non noire (6) est constituée d'un film.

2. Pneumatique de véhicule selon la revendication 1, **caractérisé en ce que** la couche non noire (6) est blanche ou colorée et comprend au moins un agent colorant, l'agent colorant étant choisi parmi les agents colorants inorganiques et les agents colorants organiques.

3. Pneumatique de véhicule selon l'une quelconque des revendications précédentes, **caractérisé en ce que** la couche non noire (6) comprend au moins un agent colorant organique comportant au moins un système d'électrons π conjugué, l'agent colorant organique étant choisi dans le groupe constitué par
le 1-[(2-chloro-4-nitrophényl) azo]2-naphtol (Pigment Rouge 4 ; n° CAS : 2814-77-9),
la 4,4'-[(3,3'-dichloro[1,1'-biphényl]-4,4'-diyl)bis(azo)]bis [2,4-dihydro-5 -méthyl-2-phényl-3H-pyrazol-3-one] (Pigment Orange 13 ; n° CAS : 3520-72-7),
la 1-amino-2-méthyl-9,10-anthracènedione (n° CAS : 82-28-0),
le Permanent Violet RL (n° CAS : 6358-30-1),
le pigment yellow 155 (n° CAS : 68516-73-4),
le disperse blue 1 (n° CAS : 2475-45-8),
l'orangé de méthyle (n° CAS : 547-58-0).

4. Pneumatique de véhicule selon l'une quelconque des revendications précédentes, **caractérisé en ce que** la couche non noire (6) comprend au moins un agent colorant comportant au moins un atome métallique ou ion métallique.

5. Pneumatique de véhicule selon la revendication 4, **caractérisé en ce que** l'agent colorant comportant au moins un atome métallique ou ion métallique est choisi dans le groupe constitué par
le Pigment Blue 27 (n° CAS : 12240-15-2),
le chromate de baryum (n° CAS : 10294-40-3),
l'auréoline (n° CAS : 13782-01-9),
le bleu égyptien (CaCu[Si₄O₁₀], n° CAS . 15843-33-1).

6. Pneumatique de véhicule selon l'une quelconque des revendications précédentes, **caractérisé en ce que** la couche non noire (6) est formée à partir d'une dispersion, en particulier suspension ou émulsion, ou d'une solution, la dispersion ou la solution contenant de 1 à 80 % en poids d'agents colorants.

7. Pneumatique de véhicule selon l'une quelconque des revendications précédentes, **caractérisé en ce que** la couche non noire (6) présente une épaisseur de couche de 1 à 1 000 µm (micromètres).

8. Pneumatique de véhicule selon l'une quelconque des revendications précédentes, **caractérisé en ce que** l'agent colmatant contient au moins une charge par laquelle est obtenue une nuance de couleur noire, comme en particulier du noir de carbone et/ou du graphite et/ou du graphène et/ou des nanotubes de carbone.

9. Procédé pour la détection d'un pneumatique de véhicule selon la revendication 1, visant à distinguer des pneumatiques de véhicules comportant un agent colmatant de pneumatiques de véhicules sans agent colmatant, dans lequel la couche d'agent colmatant (5) est reconnue par un détecteur en raison de la couche non noire (6).

10. Procédé pour le recyclage de pneumatiques de véhicules, comprenant au moins les étapes suivantes de processus :
a) fourniture de pneumatiques de véhicules à recycler ;
b) exécution du procédé selon la revendication 9 ;
c) séparation spatiale des pneumatiques de véhicules comportant un agent colmatant d'avec les pneumatiques de véhicules sans agent colmatant ;
d) recyclage des pneumatiques de véhicules sans agent colmatant, comprenant la fragmentation des pneumatiques de véhicules ;
e) envoi des pneumatiques de véhicules comportant un agent colmatant à un processus de recyclage séparé, comprenant la séparation de l'agent colmatant et seulement alors la fragmentation subséquente des pneumatiques de véhicules.
